# EUROPEAN PATENT APPLICATION

(11) **EP 4 679 923 A1**
(43) Date of publication of application: **14.01.2026**
(21) Application number: 24781151.6
(22) Date of filing: 25.03.2024
(51) Int. Cl.: H04W 72/50, H04L 5/00, H04L 27/26, H04W 72/04, H04W 74/08, H04W 84/12

(54) **METHOD AND DEVICE FOR TXOP SHARING FOR MULTIPLE USERS IN WIRELESS LAN SYSTEM**

(30) Priority: 28.03.2023 KR 20230040668; 05.04.2023 KR 20230044984; 18.04.2023 KR 20230050925
(71) Applicant: LG ELECTRONICS INC., Yeongdeungpo-gu Seoul 07336 (KR)
(72) Inventor: KIM, Geonhwan, Seoul 06772 (KR); JANG, Insun, Seoul 06772 (KR); CHOI, Jinsoo, Seoul 06772 (KR); BAEK, Sunhee, Seoul 06772 (KR); YOON, Yelin, Seoul 06772 (KR)
(74) Representative: Plasseraud IP
(86) International application number: PCT/KR2024/003679
(87) International publication number: WO 2024/205160

(57) **Abstract**

The present disclosure relates to transmission opportunity (TXOP) sharing for multiple users in a wireless local area network (LAN) system. According to an embodiment of the present disclosure, a method performed by means of a station (STA) in a wireless LAN system comprises the steps of: receiving a TXOP sharing (TXS) trigger frame including a plurality of user information fields, each of the plurality of user information fields indicating a corresponding allocation period from among a plurality of allocation periods in a TXOP period related to the TXS trigger frame; identifying one or more allocation periods of the STA on the basis of one or more user information fields for the STA from among the plurality of user information fields; determining a start time of a first allocation period from among the one or more allocation periods on the basis of sequence information and/or a basic trigger frame; and transmitting data in the first allocation period after the start time.

## Description

### Technical Field

The present disclosure is related to transmission opportunity (TXOP) sharing for multi-user in wireless LAN system.

### Background Art

Wireless local area networks (WLANs) have been improved in various ways. For example, the IEEE 802.1 1ax standard proposed an improved communication environment using orthogonal frequency division multiple access (OFDMA) and downlink multi-user multiple input, multiple output (DL MU MIMO) techniques.

The present disclosure proposes technical features that can be utilized in a new communication standard. For example, the new communication standard may be the Extreme High Throughput (EHT) standard, which is currently under discussion. The EHT standard may utilize newly proposed increased bandwidth, an improved PHY layer protocol data unit (PPDU) structure, improved sequences, and a Hybrid Automatic Repeat Request (HARQ) technique. The EHT standard may also be referred to as the IEEE 802.11be standard.

In a wireless LAN system, TXOP sharing may be supported. In a TXOP sharing procedure, a scheduled STA may i) transmit to an associated AP, and/or ii) transmit to another STA. TXOP sharing may be supported for both single user and multiple users.

### Disclosure of Invention

### Technical Problem

An aspect of the present disclosure is to provide method and apparatus for TXOP sharing for multi-user in wireless LAN system.

### Solution to Problem

According to an embodiment of the present disclosure, a method performed by a station (STA) in a wireless local area network (LAN) system comprises: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

According to an embodiment of the present disclosure, a station (STA) in a wireless local area network (LAN) system comprises: a transceiver; a memory; and at least one processor operatively coupled to the transceiver and the memory, wherein the memory stores instructions that, based on being executed by the at least one processor, perform operations comprising: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

According to an embodiment of the present disclosure, an apparatus configured to operate in a wireless local area network (LAN) system comprises: at least one processor; and at least one memory operatively coupled to the at least one processor, wherein the at least one memory stores instructions that, based on being executed by the at least one processor, perform operations comprising: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

According to an embodiment of the present disclosure, a non-transitory computer readable medium (CRM) has stored thereon a program code implementing instructions that, based on being executed by at least one processor, perform operations comprising: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

According to an embodiment of the present disclosure, an access point (AP) in a wireless local area network (LAN) system comprises: a transceiver; a memory; and at least one processor operatively coupled to the transceiver and the memory, wherein the memory stores instructions that, based on being executed by the at least one processor, perform operations comprising: obtaining a transmission opportunity (TXOP); configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and transmitting the TXS trigger frame, wherein the plurality of user information fields comprise at least one user information field for a STA indicating at least one allocation duration of the STA, and wherein a start time of a first allocation duration among the at least one allocation duration is determined based on at least one of order information or a basic trigger frame.

According to an embodiment of the present disclosure, a method performed by an access point (AP) in a wireless local area network (LAN) system comprises: obtaining a transmission opportunity (TXOP); configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and transmitting the TXS trigger frame, wherein the plurality of user information fields comprise at least one user information field for a STA indicating at least one allocation duration of the STA, and wherein a start time of a first allocation duration among the at least one allocation duration is determined based on at least one of order information or a basic trigger frame.

### Advantageous Effect

The present disclosure may have various advantageous effects.

For example, method for configuring a User Info field, and method for multiple allocation indication and order indication in the present disclosure can be simply designed from a multi-user perspective. In addition, in a single-user triggered TXOP sharing protocol/procedure, if each STA requires a large number of P2P transmissions for a period exceeding the maximum allocation duration that can be allocated from the AP, the AP must obtain a new TXOP duration through medium contention, but the multiple triggered TXOP sharing method of the present disclosure can enable the STA to perform and complete P2P transmissions for a relatively long period of time within a single TXOP duration.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 illustrates the layout of resource units (RUs) used for a 20 MHz PPDU.
FIG. 7 illustrates the layout of resource units (RUs) used for 40MHz PPDU.
FIG. 8 illustrates the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used, supported, and defined within the 6 GHz band.
FIG. 13 shows a modified example of a transmitting device and/or a receiving device of the present disclosure.
FIG. 14 shows an example of a procedure related to RTS/CTS transmission.
FIG. 15 shows an example of the value of the TXOP Sharing Mode subfield.
FIG. 16 shows an example of operation when the TXOP Shared Mode subfield has a value of 2.
FIG. 17 shows an example of the User Info Field format of the MU-RTS TXS TF.
FIG. 18 shows an example of a method performed by a STA for multiple triggered TXOP sharing according to an embodiment of the present disclosure.
FIG. 19 shows an example of a signal flow between AP and STA for multiple triggered TXOP sharing according to an embodiment of the present disclosure.
FIG. 20 shows a first example of the configuration of a User Info field according to an embodiment of the present disclosure.
FIG. 21 shows a second example of the configuration of a User Info field according to an embodiment of the present disclosure.
FIG. 22 shows a first example of an operation based on multiple triggered TXOP sharing according to an embodiment of the present disclosure.
FIG. 23 shows a second example of an operation based on multiple triggered TXOP sharing according to an embodiment of the present disclosure.
FIG. 24 shows a third example of an operation based on multiple triggered TXOP sharing according to an embodiment of the present disclosure.
FIG. 25 shows an example of a TXOP allocation method according to an embodiment of the present disclosure.
FIG. 26 shows an example of the configuration of a User Info field for prioritized allocation of short TXOP durations according to an embodiment of the present disclosure.
FIG. 27 shows an example of an operation of prioritized allocation of short TXOP duration according to an embodiment of the present disclosure.
FIG. 28 shows an example of allocating TXOP durations to STAs with different power sensitivities in a multi-user triggered TXOP sharing procedure according to an embodiment of the present disclosure.
FIG. 29 shows an example of a User Info field format considering power sensitivity according to an embodiment of the present disclosure.
FIG. 30 shows an example of an operation of prioritized allocation of TXOP duration considering power sensitivity according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

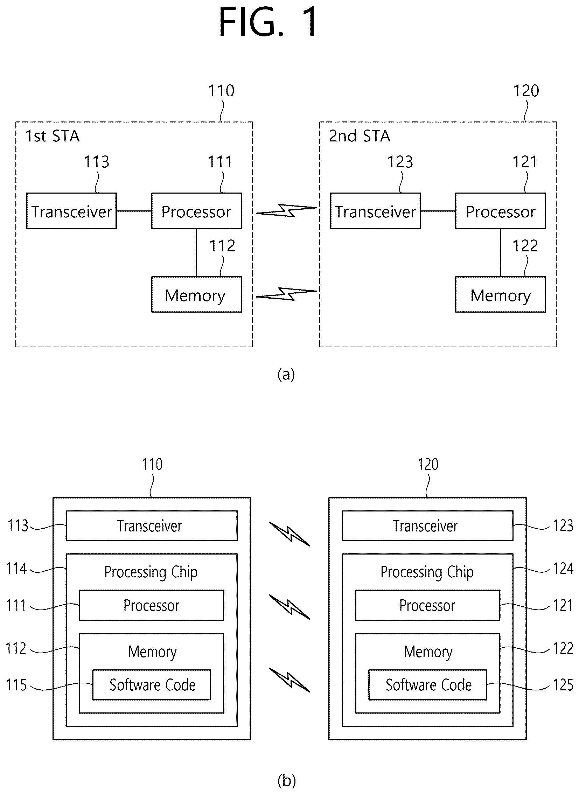

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/axibe packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

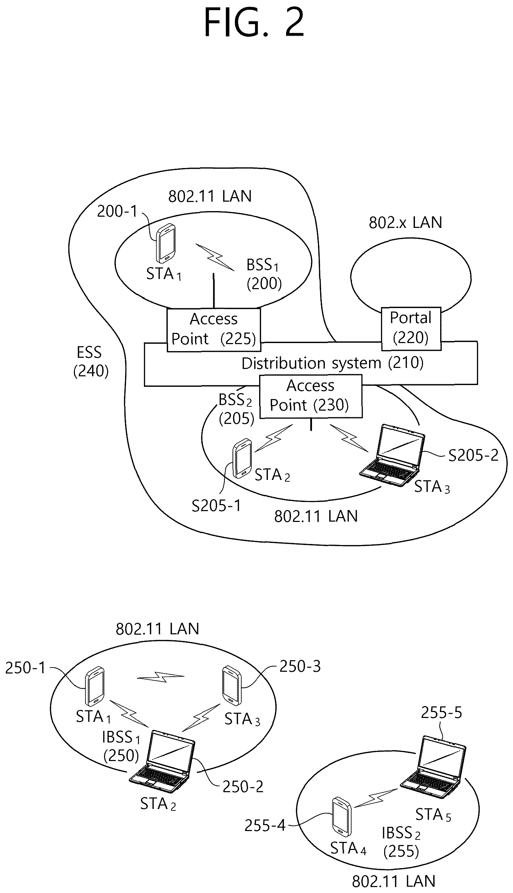

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

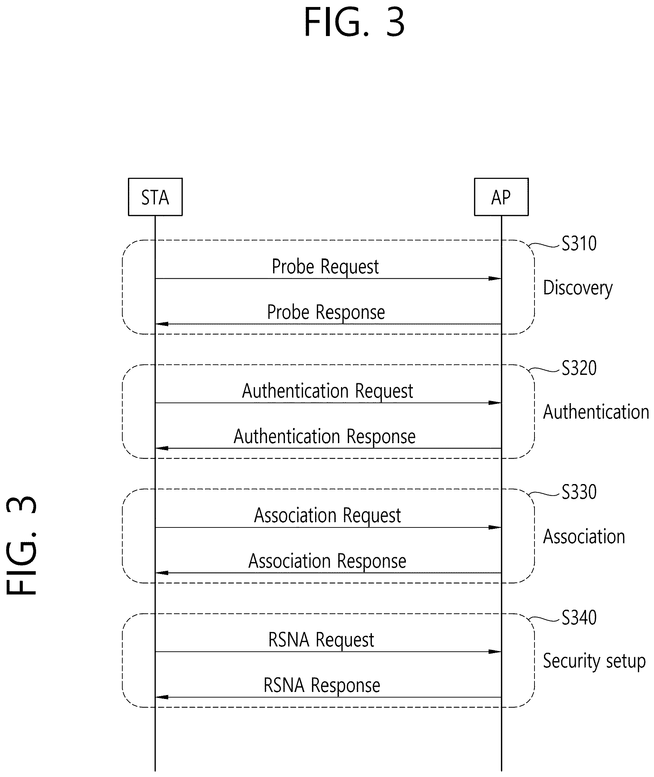

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

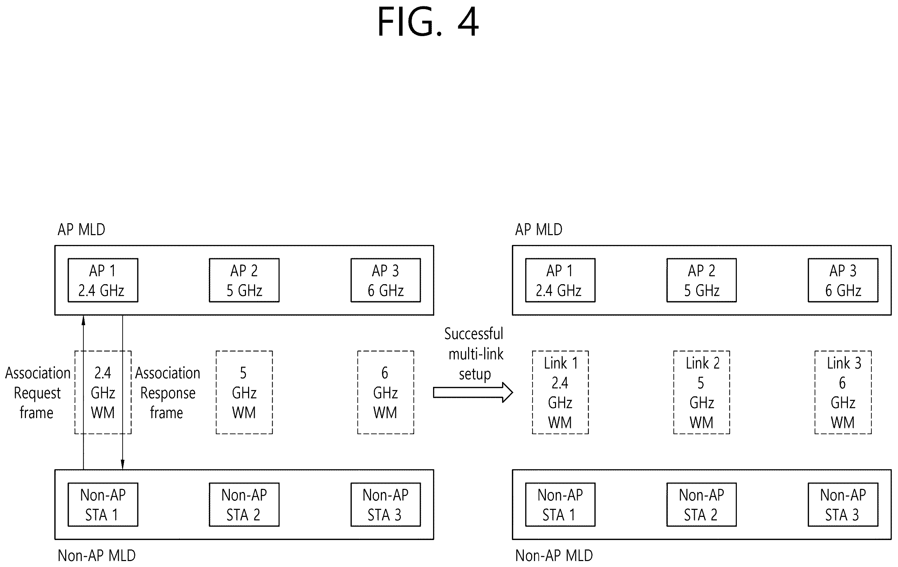

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

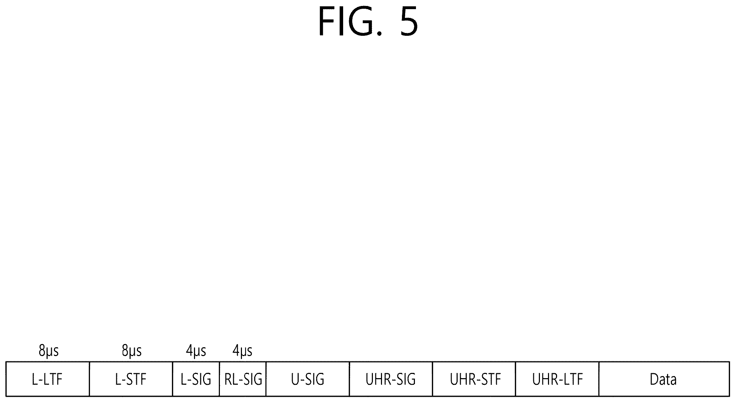

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 5 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{ subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 5. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

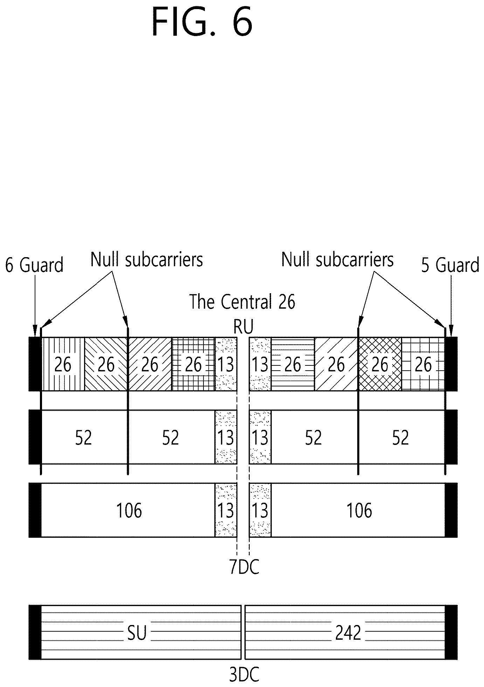

FIG. 6 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

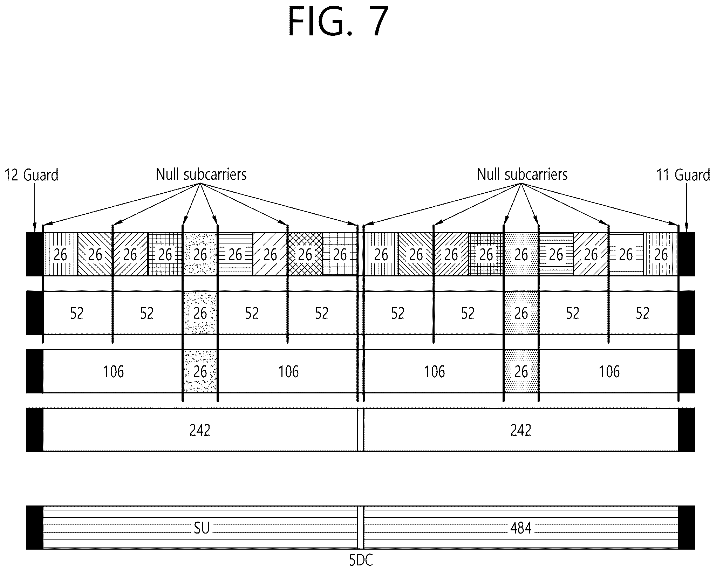

FIG. 7 illustrates the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

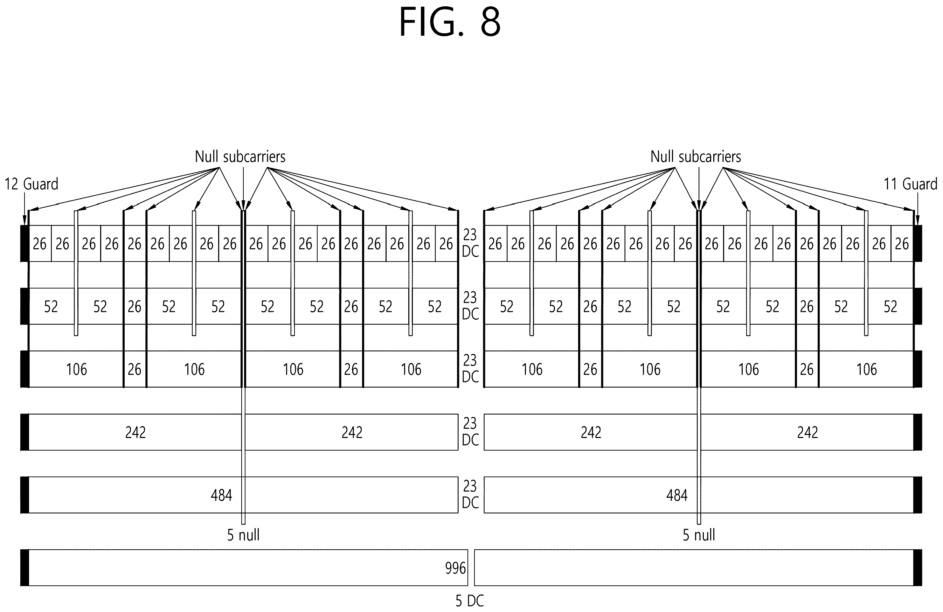

FIG. 8 illustrates the layout of resource units (RUs) used for an 80MHz PPDU. The layout of the resource units (RUs) used in the present disclosure may vary. For example, the layout of the resource units (RUs) used in the 80MHz band may vary.

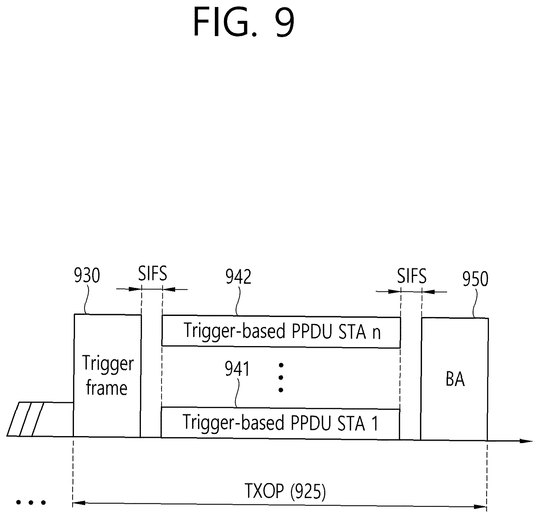

FIG. 9 shows an operation related to UL-MU. As shown, a transmitting STA (e.g., AP) can obtain TXOP 925 by performing channel access through contending (i.e., backoff operation) and transmit trigger frame 930. That is, the transmitting STA (e.g., AP) can transmit PPDU including trigger frame 930. When PPDU including trigger frame is received, trigger-based (TB) PPDU is transmitted after delay of SIFS.

TB PPDU 941, 942 can be transmitted at the same time and transmitted from multiple STA (e.g., user STA) whose AID is indicated in trigger frame 930. ACK frame 950 for TB PPDU can be implemented in various forms. For example, ACK frame 950 for TB PPDU can be implemented in the form of block ACK (BA).

In FIG. 9, transmission(s) of trigger Frame 930, TB PPDU 941, 942 and/or ACK Frame 950 can be performed within TXOP 925.

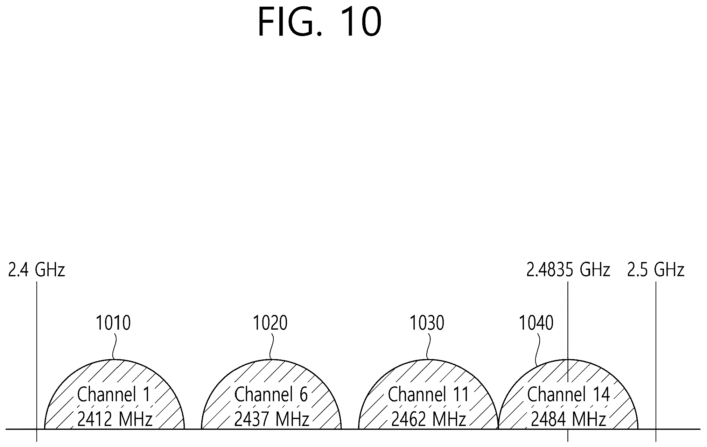

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 10 illustrates examples of four channels within the 2.4 GHz band. The illustrated first frequency region 1010 to fourth frequency regions 1040 may each include one channel. For example, the first frequency region 1010 may include channel 1 (a 20 MHz channel with index 1). In this case, the center frequency of channel 1 may be set to 2412 MHz. The second frequency range 1020 may include channel 6. The center frequency of channel 6 may be set to 2437 MHz. The third frequency range 1030 may include channel 11. The center frequency of channel 11 may be set to 2462 MHz. The fourth frequency range 1040 may include channel 14. The center frequency of channel 14 may be set to 2484 MHz.

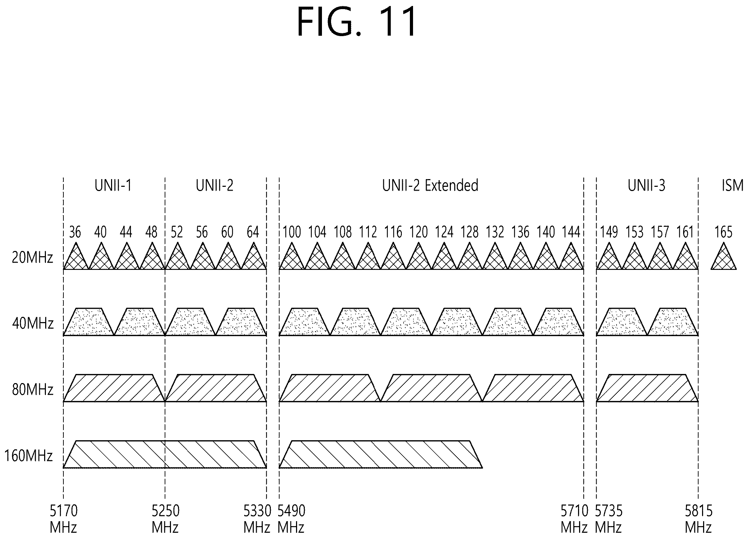

FIG. 11 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 11 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

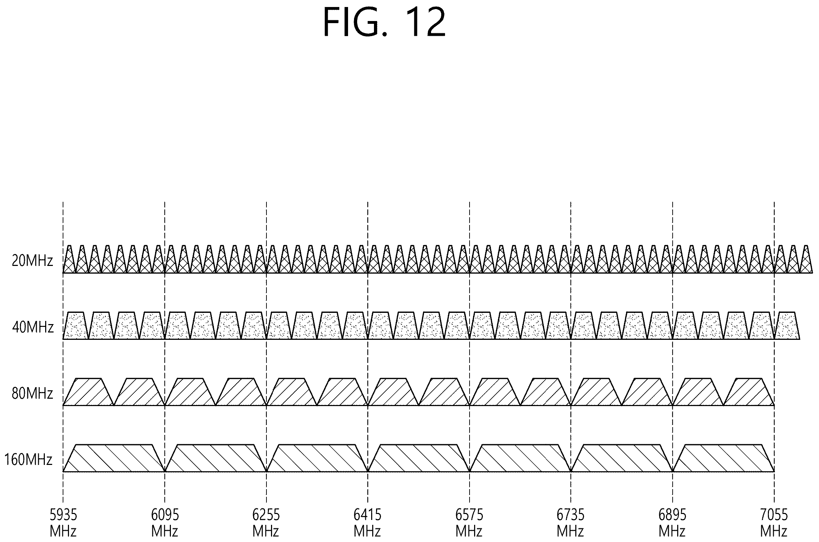

FIG. 12 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 12 may vary.

For example, the 20 MHz channel in FIG. 12 may be defined starting from 5.940 GHz. Specifically, the leftmost channel among the 20 MHz channels in FIG. 12 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 12 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

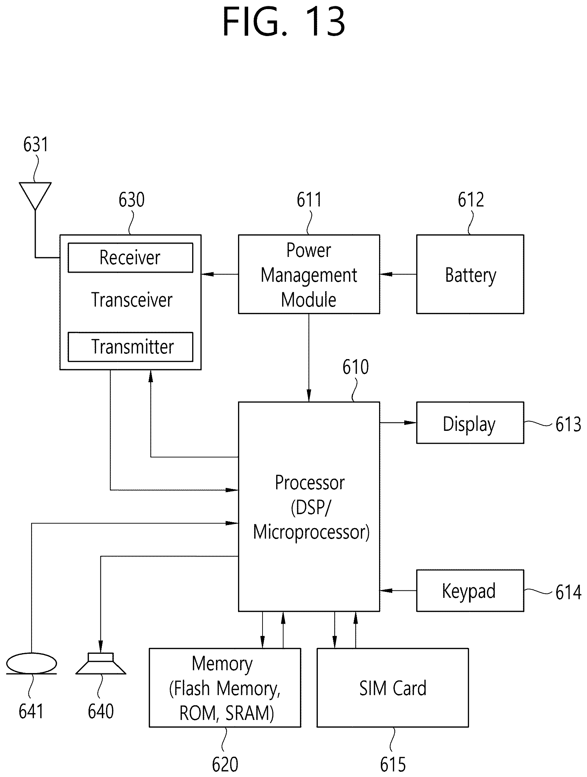

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 160 of FIG. 13 may be the same as the memory 112, 122 of FIG. 1. Alternatively, the memory 160 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 616 may be an integrated circuit used to securely store an international mobile subscriber identity (IMSI) and its associated keys, which are used to identify and authenticate subscribers in mobile devices such as mobile phones and computers.

Referring to FIG. 13, the speaker 640 may output sound-related results processed by the processor 610. The microphone 641 may receive sound-related input to be used by the processor 610.

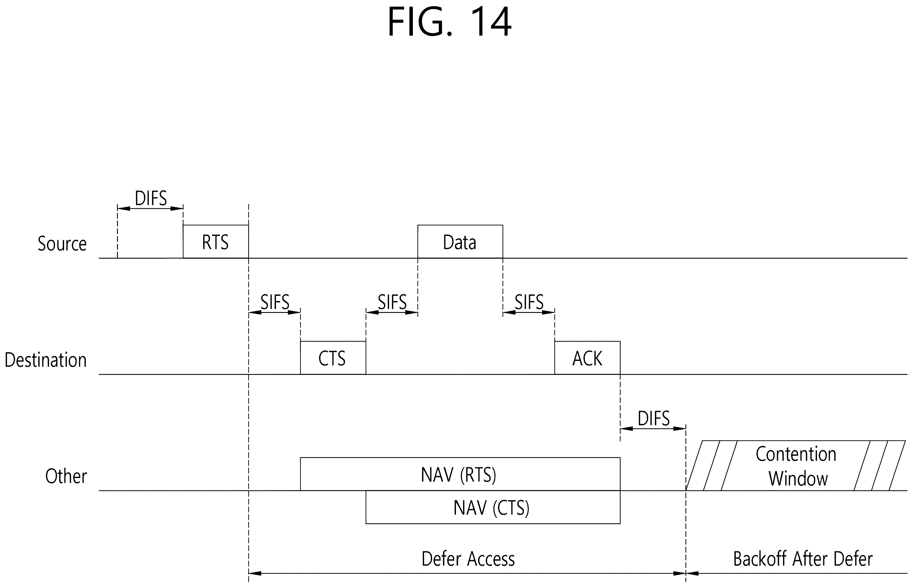

FIG. 14 shows an example of a procedure related to RTS/CTS transmission.

Referring to FIG. 14, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 14 shows setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), the STA can set/reset/update the NAV.

Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF).

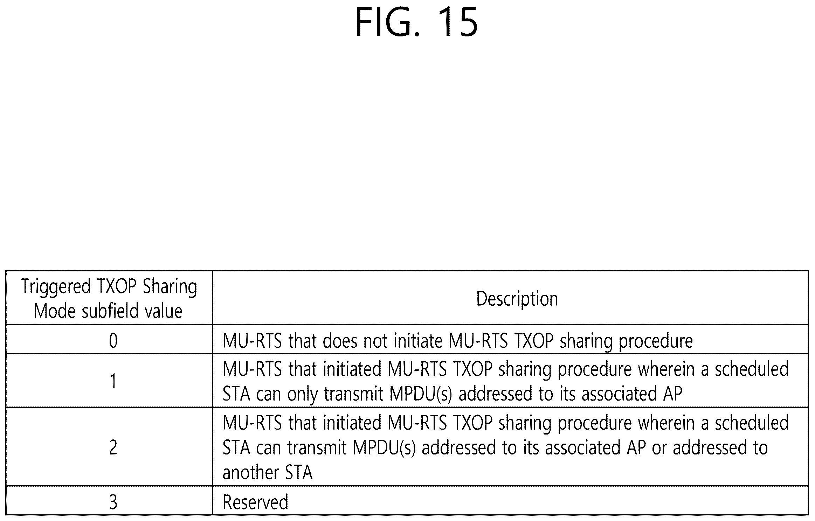

FIG. 15 shows an example of the value of the TXOP Sharing Mode subfield.

Referring to FIG. 15, when the value of the TXOP Sharing Mode subfield is 1, one or more (non-TB) PPDU transmissions to the AP may be supported. When the value of the TXOP Sharing Mode subfield is 2, peer-to-peer transmissions may also be supported in addition to (non-TB) PPDU transmissions to the AP.

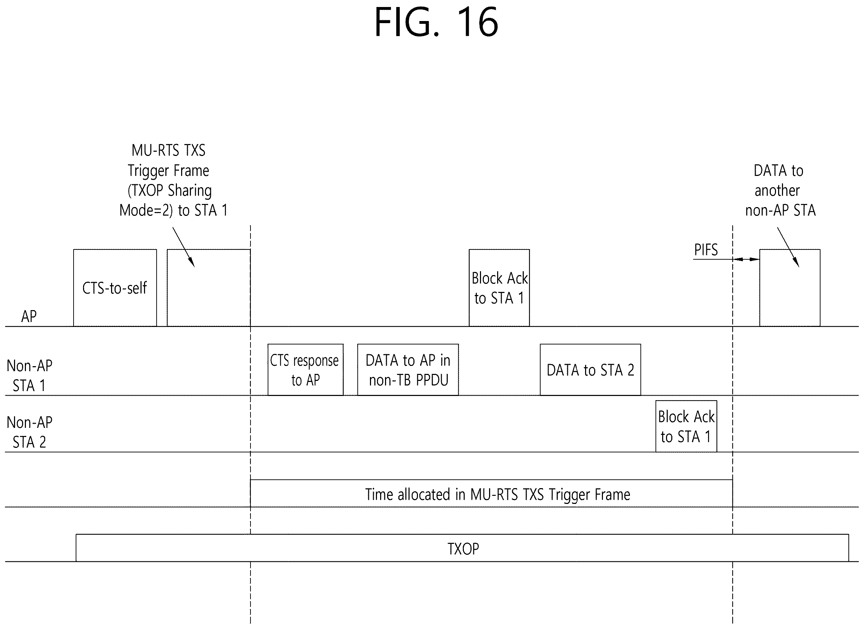

FIG. 16 shows an example of operation when the TXOP Shared Mode subfield has a value of 2.

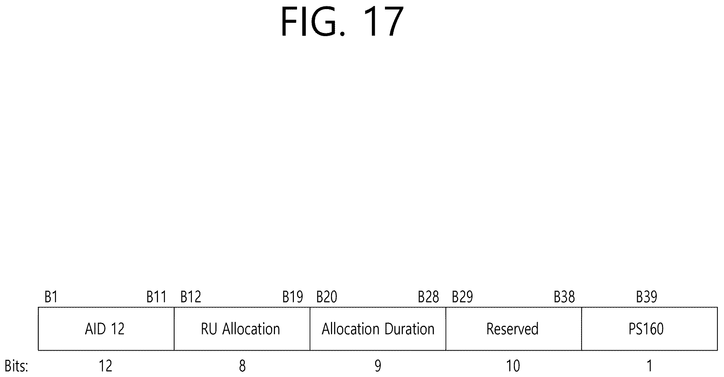

Referring to FIG. 16, an AP may transmit a MU-RTS TXS TF comprising allocation (time) duration information (e.g., Time allocated in MU-RTS TXS Trigger Frame) to non-AP STA 1. Non-AP STA 1 may transmit a CTS in response to the MU-RTS TXS TF and perform P2P transmission to non-AP STA 2. At this time, the (time) duration allocated from the AP to non-AP STA 1 may be indicated in units of 16 µ*s* by the Allocation Duration subfield of FIG. 17.

FIG. 17 shows an example of the User Info Field format of the MU-RTS TXS TF.

Referring to FIG. 17, the allocation duration subfield can include 9 bits from B20 to B28 in the MU-RTS TXS TF and can indicate an allocation duration in units of 16 . In this case, the maximum length of the allocation duration that can be indicated by the allocation duration subfield can be 16 × 2⁹ = 8192 µs.

Meanwhile, the EHT AP can allocate one TXOP time (or one allocation duration within the TXOP duration) to one STA using one User Info field as illustrated in FIG. 17. However, multi-user triggered TXOP sharing, in which multiple STAs can perform P2P transmission during the TXOP duration provided by the AP (e.g., through modification of the existing protocol), can be implemented, and/or the AP can be implemented to provide multiple TXOP durations (or multiple allocation durations within the TXOP) to each STA.

The waiting time for medium access, which can be set via the Duration/ID field (2 octets) in the MAC header, can be up to 32,768 µs. On the other hand, the length of the TXOP duration (or allocation duration within the TXOP duration) allocated by the AP to the STA via the (triggered) TXOP sharing protocol can be indicated in units of 16 µs by the allocation duration subfield (9 bits) as in FIG. 17.

During a (triggered) TXOP sharing procedure performed within a single TXOP duration obtained by the AP, the maximum length of the allocation duration indicated by the allocation duration subfield in the MU-RTS TXS TF may be 8,192 . If a shared STA (i.e., a STA participating in the TXOP sharing procedure and/or a STA that has received a TXS trigger frame) is expected to perform many frame exchanges during the P2P operation and thus requires a long TXOP duration (or an allocation duration within the TXOP duration) exceeding the maximum allocation duration (e.g., 8,192 µs), completing the P2P operation within the single TXOP duration obtained by the AP may be considered. For example, in order to complete the P2P operation within the single TXOP duration, the unit of the allocation duration indicated by the allocation duration subfield may be set to a value greater than 16 µs, so that the P2P operation can be performed for a time longer than the existing maximum length of 8,192 µs. As another example, a TXOP duration (or an allocation duration within a TXOP duration) may be allocated multiple times to a single STA.

The present disclosure provides a method/apparatus for providing multiple P2P transmission opportunities to STAs participating in a multi-user triggered TXOP sharing protocol/procedure within a single TXOP duration obtained by an AP. In other words, the present disclosure provides a multiple triggered TXOP sharing method and/or apparatus for implementing the method, which supports multiple P2P transmissions within the same TXOP duration for some STAs participating in the multi-user triggered TXOP sharing procedure.

Embodiments of the present disclosure can be applied not only to the multi-user triggered TXOP sharing procedure but also to the single-user triggered TXOP sharing procedure.

Embodiments of the present disclosure can also be applied to support at least one transmission within the same TXOP duration for some STAs participating in the multi-user triggered TXOP sharing procedure.

In the present disclosure, a STA (e.g., non-AP STA 1 of FIG. 16) that is allocated at least one allocation duration within a TXOP duration for P2P transmission may be referred to as a P2P TX (or P2P TX STA), and a STA (e.g., non-AP STA 2 of FIG. 16) that receives frames from a P2P TX may be referred to as a P2P RX (or P2P RX STA).

In the present disclosure, the names of terms may be replaced with other terms having equivalent meanings, and a STA may include an AP STA and/or a non-AP STA.

In the present disclosure, a trigger frame may include a basic trigger frame and/or a MU-RTS TXS trigger frame.

A basic trigger frame may be used to indicate the start time of an allocation duration of a single STA. For example, a STA may perform transmission (e.g., transmission of a non-TB PPDU to an AP and/or P2P transmission to another STA) during an allocation duration for the STA immediately after receiving a basic trigger frame for the STA. The basic trigger frame may be referred to simply as a trigger frame.

The MU-RTS TXS trigger frame may be used to allocate a TXOP duration (or an allocation duration within a TXOP duration) for at least one STA. The MU-RTS TXS trigger frame may also be referred to simply as a TXS trigger frame.

In the present disclosure, allocating a TXOP duration may include allocating the entire TXOP duration and/or allocating an allocation duration within the entire TXOP duration.

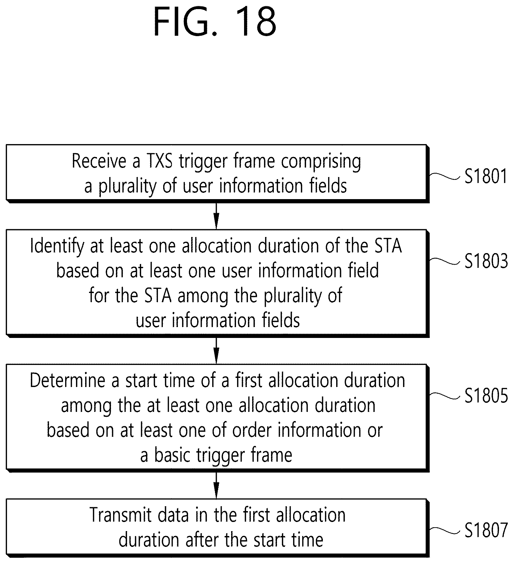

FIG. 18 shows an example of a method performed by a STA for multiple triggered TXOP sharing according to an embodiment of the present disclosure.

Referring to FIG. 18, in step S1801, the STA may receive a TXS trigger frame comprising a plurality of user information fields. Each of the plurality of user information fields may indicate a corresponding allocation duration among a plurality of allocation durations within a TXOP duration related to the TXS trigger frame.

In step S1803, the STA may identify at least one allocation duration of the STA based on at least one user information field for the STA among the plurality of user information fields.

In step S1805, the STA may determine a start time of a first allocation duration among the at least one allocation duration based on at least one of order information (e.g., order indication bit) or a basic trigger frame.

In step S1807, the STA may transmit data in the first allocation duration after the start time.

According to various embodiments, the STA may transmit the data in the first allocation duration immediately after receiving the TXS trigger frame, based on a user information field indicating the first allocation duration including the order information set to a first value (e.g., 1).

According to various embodiments, the STA may transmit the data in the first allocation duration immediately after receiving the basic trigger frame for the STA, based on a user information field indicating the first allocation duration including the order information set to a second value (e.g., 0). The basic trigger frame may be received after the TXS trigger frame is received.

According to various embodiments, the at least one user information field for the STA may comprise a first user information field indicating the first allocation duration and a second user information field indicating a second allocation duration. The first user information field may be positioned before the second user information field in a user information list field of the TXS trigger frame.

According to various embodiments, the first user information field may comprise multiple allocation information (e.g., multiple allocation indication bit) indicating that at least one user information field is positioned after the first user information field in the user information list field. The multiple allocation information may be set to a first value (e.g., 1).

According to various embodiments, the first user information field and the second user information field may be positioned non-consecutively in the user information list field.

According to various embodiments, the first user information field and the second user information field may be positioned consecutively in the user information list field.

According to various embodiments, after decoding the first user information field, the STA may decode at least one user information field consecutively following the first user information field in the user information list field until no user information field for the STA is decoded.

According to various embodiments, after transmitting the data in the first allocation duration, the STA may transmit data in the second allocation duration. The STA may transmit data in the second allocation duration immediately after receiving the basic trigger frame for the STA.

According to various embodiments, the data may be transmitted to at least one of an access point (AP) or another STA.

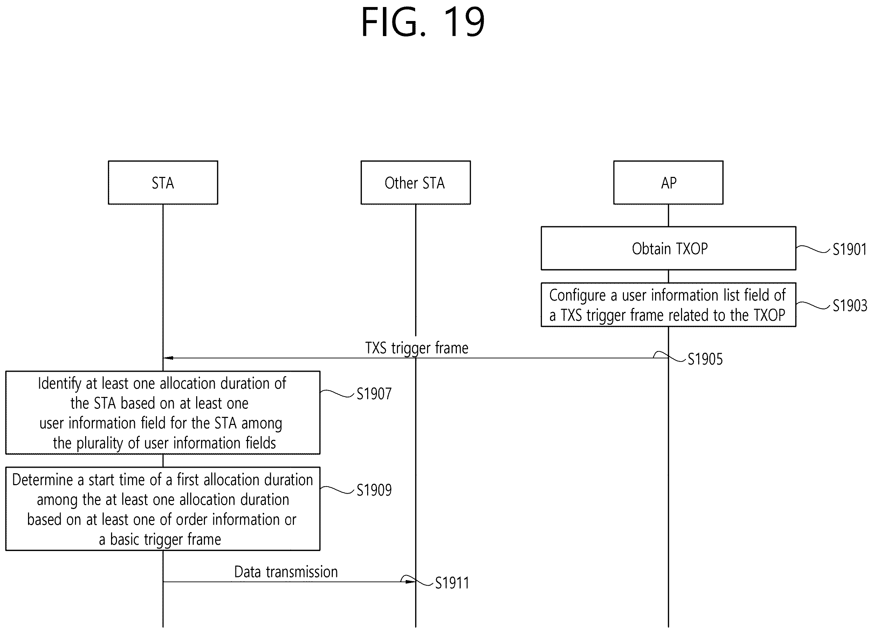

FIG. 19 shows an example of a signal flow between AP and STA for multiple triggered TXOP sharing according to an embodiment of the present disclosure.

Referring to FIG. 19, in step S1901, the AP may obtain a TXOP.

In step S1903, the AP may configure a user information list field of a TXOP sharing (TXS) trigger frame related to the TXOP. The user information list field may comprise a plurality of user information list fields, and each of the plurality of user information fields may indicate a corresponding allocation duration among a plurality of allocation durations within the TXOP.

In step S1905, the AP may transmit the TXS trigger frame to the STA.

In step S1907, the STA may identify at least one allocation duration of the STA based on at least one user information field for the STA among the plurality of user information fields.

In step S1909, the STA may determine a start time of a first allocation duration among the at least one allocation duration based on at least one of order information (e.g., order indication bit) or a basic trigger frame.

In step S1911, the STA may transmit data in the first allocation duration after the start time.

Hereinafter, a detailed implementation of multiple triggered TXOP sharing is described.

The multiple triggered TXOP sharing method of the present disclosure may include a method for configuring User Info field, a method for decoding a multi-user information, and/or an operation method based on multiple triggered TXOP sharing in a multi-user use case.

### I. Method for configuring User Info field

### 1. When P2P is performed considering the order of User Info fields

In this case, the order of allocation durations within a TXOP duration may follow the order of corresponding User Info fields within a User Info List field. To allocate two or more TXOP durations (or allocation durations within a TXOP duration) to multiple STAs, as well as to the same STA, the User Info List field of the MU-RTS TXS TF may include multiple User Info fields, including two or more User Info fields for the same STA. Two or more User Info fields for the same STA may be arranged consecutively or non-consecutively depending on the scheduling of the AP's TXOP duration (or allocation durations within the TXOP duration). Multiple STAs receiving a MU-RTS TXS TF including such a User Info List field can sequentially decode the User Info fields, starting from the first to the last, to identify/calculate the allocation durations included in each User Info field. That is, the STA can identify the start time of the allocation duration for the STA by adding the allocation durations within all previously allocated User Info fields(s) to the User Info field allocated to the STA.

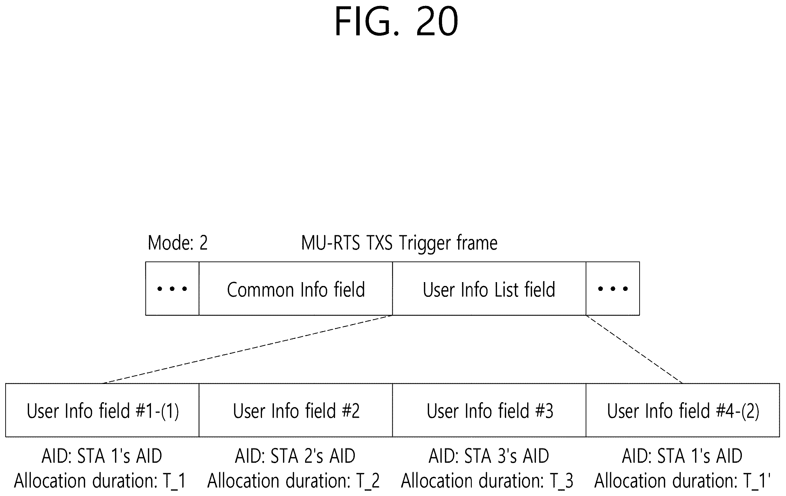

FIG. 20 shows a first example of the configuration of a User Info field according to an embodiment of the present disclosure. In FIG. 20, two or more User Info fields for the same STA may be arranged non-consecutively.

The EHT AP may allocate/configure allocation durations within the MU-RTS TXS TF in which the value of the (triggered) TXOP sharing mode subfield is set to 2 based on the TXOP duration requested by each STA. At this time, as in FIG. 20, two User Info fields for STA 1 may be arranged non-consecutively according to the scheduling of the AP. STA 1 may perform the first P2P transmission during the time duration of the allocation duration T_1 identified from the User Info field #1-(1) first allocated to STA 1, located at the frontmost position after receiving the MU-RTS TXS TF, as in the case of a single user. STA 2 and STA 3 can identify the time duration T_2 from after T_1 and the time duration T_3 from after (T_1 + T_2) as their respective allocation durations based on the allocation duration information in the User Info fields located before their own User Info fields (i.e., User Info field #2 for STA 2 and User Info field #3 for STA 3). Finally, STA 1 can perform a second P2P transmission during the additional time duration of the allocation duration T_1' identified from the second allocated User Info field #4-(2) for STA 1.

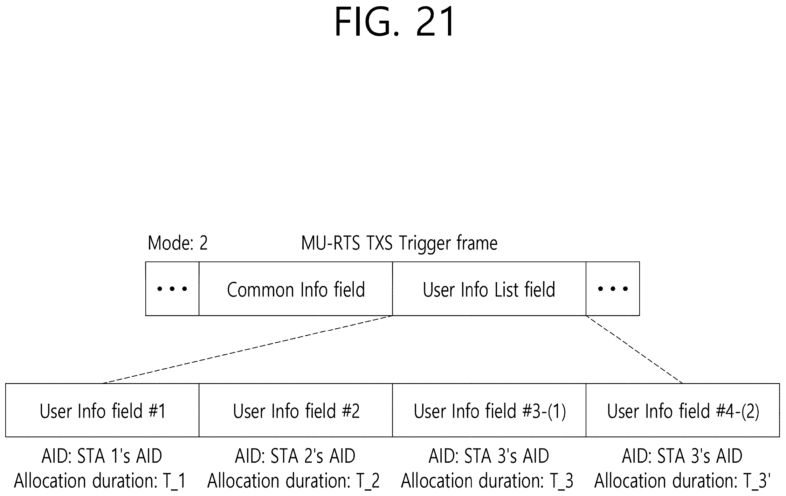

FIG. 21 shows a second example of the configuration of a User Info field according to an embodiment of the present disclosure. In FIG. 21, two or more User Info fields for the same STA may be arranged consecutively.

The EHT AP can allocate/configure allocation durations within the MU-RTS TXS TF in which the value of the (triggered) TXOP sharing mode subfield is set to 2 based on the TXOP duration requested by each STA. At this time, as in FIG. 21, two User Info fields for STA 3 can be arranged consecutively according to the scheduling of the AP. STA 1 can identify the time duration of T_1 allocated to STA 1 as the allocation duration after receiving the MU-RTS TXS TF, just like in the case of a single user. Subsequently, STA 2 and STA 3 can perform P2P transmission during the time duration T_2 from after T_1 and time duration T_3 from after (T_1 + T_2), respectively, based on the allocation duration information within the User Info fields located before their own User Info fields (i.e., User Info field #2 for STA 2 and User Info field #3-(1) for STA 3). Finally, STA 3 may perform additional P2P transmission during the time duration of the allocation duration T_3' identified by the User Info field #4-(2) consecutively allocated to STA 3.

Examples of consecutive/non-consecutive allocation of multiple TXOPs (or multiple allocation durations within a TXOP) as described above may not be limited to the cases of FIGs. 20 and 21. For example, User Info fields with the same AID may be arranged in any User Info field position in a consecutive or non-consecutive order. When the AP configures the User Info fields in the order of STAs that will perform P2P transmission, each STA may identify that another STA is performing P2P transmission during the time duration corresponding to the allocation duration of all User Info fields previously arranged in the User Info field allocated to it.

2. When performing P2P regardless of the order of User Info fields.

In this case, the order of allocation durations within a TXOP duration may be independent of the order of corresponding User Info fields within the User Info List field. Performing P2P with consideration of the order of User Info fields relies on AP-side scheduling, but performing P2P regardless of the order of User Info fields may not depend on AP-side scheduling. To perform P2P with consideration of the order of User Info fields, a STA can sequentially decode User Info fields, starting from the first User Info field and ending with the User Info field allocated to the STA, to identify/calculate the allocation duration(s) for the STA. Conversely, when performing P2P regardless of the order of User Info fields, a STA can perform P2P transmission using only the allocation duration information in the User Info field corresponding to (or including) the STA's AID. For this purpose, additional ordering instructions and/or AP triggering may be required.

### II. Decoding method of the multiple User Info fields

### 1. Decoding based on multiple allocation indication

When a STA decodes the User Info List field after receiving the MU-RTS TXS TF, it must identify that multiple TXOPs (or multiple allocation durations within a TXOP duration) have been allocated to the STA. After identifying that multiple TXOPs (or multiple allocation durations within a TXOP duration) have been allocated, the STA must continue to decode the User Info List field to read the additionally allocated User Info fields for the STA.

For example, to identify that multiple TXOPs (or multiple allocation durations within a TXOP duration) have been allocated, the reserved subfield within the User Info field, as shown in FIG. 17, can be used. If a User Info field having the same AID as the STA's AID in the current User Info field is additionally positioned after the current User Info field in the User Info List field, one bit (or reserved bits) of the reserved subfield of the current User Info field may be used for multiple allocation indication. That is, if the multiple allocation indication bit of the User Info field for the STA (or the User Info field including the STA's AID) is 1, the STA shall continue decoding the User Info List field until it reaches the User Info field including the STA's AID and the multiple allocation indication bit set to 0. At this time, if the User Info fields in the MU-RTS TXS TF are configured by considering the order of the allocation durations within the TXOP duration, the STA allocated multiple TXOPs (or multiple allocation durations within the TXOP duration) may also utilize allocation duration information allocated to other STAs to determine the start point of the subsequent allocation duration.

### 2. Decoding of consecutive User Info fields

For example, as shown in FIG. 21, when multiple TXOPs (or multiple allocation durations within a TXOP duration) are consecutively allocated to a specific STA, a decoding rule can be configured such that, after decoding the User Info field corresponding to the STA's AID, the STA further decodes at least one subsequent User Info field. Given the constraint that the AP sequentially places multiple TXOP durations (or multiple allocation durations within a TXOP duration), this rule has the advantage of not requiring the use of a reserved bit, unlike when using a multiple allocation indication bit.

### III. Operation method based on multiple triggered TXOP sharing in a multi-user use case

### 1. When P2P is performed considering the order of User Info fields

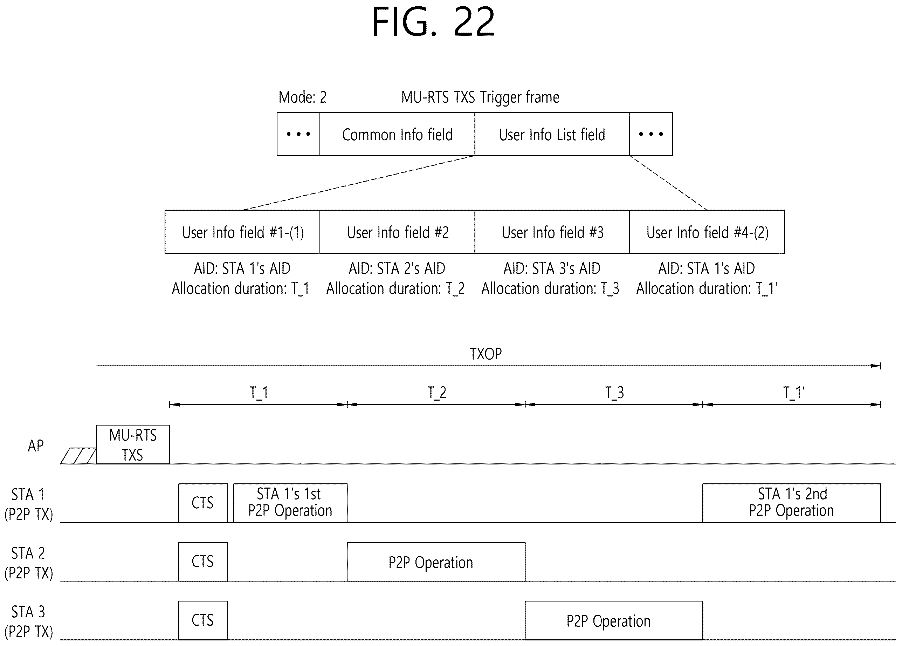

FIG. 22 shows a first example of an operation based on multiple triggered TXOP sharing according to an embodiment of the present disclosure. In FIG. 22, i) the order of allocation durations allocated to three STAs within a TXOP duration follows the order of corresponding User Info fields within the User Info List field, and ii) two or more User Info fields for the same STA (e.g., STA 1) are arranged non-consecutively, as shown in FIG. 20.

Referring to FIG. 22, STA 1, which has been allocated two non-consecutive TXOP durations (or two allocation durations within a TXOP duration) from an EHT AP, can read User Info field #1-(1) with the multipe allocation indication bit set to 1. Since the multiple allocation indication bit is set to 1, STA 1 can identify that there is an additional User Info field for STA 1 in the User Info List field, and can continue to decode the User Info List field. After identifying all additionally allocated User Info fields by decoding up to User Info field #4-(2) with the multiple allocation indication bit set to 0, STA 1 can perform P2P transmission during the time duration T_1 immediately after receiving MU-RTS TXS TF. STA 1, which completes the first P2P transmission, can wait until the start time of the additionally allocated T_1'. STA 2 can read the allocation duration information of User Info fields #1-(1) and #2 after receiving MU-RTS TXS TF, and identify T_2 as its own allocation duration from after T_1. STA 3 can also perform P2P transmission during a time duration T_3 from after (T_1 + T_2) after reading the allocation duration information of User Info fields #1-(1), #2, and #3. After time (T_1 + T_2 + T_3), which is the end point of STA 3's P2P transmission, STA 1 can perform additional P2P transmission during time T_1', which is the second allocation duration of STA 1. Accordingly, the AP can allocate multiple TXOP durations (or multiple allocation durations within a TXOP duration) to a STA that requires many frame exchanges within a single TXOP duration obtained by the AP, thereby enabling the STA to complete P2P transmission more quickly.

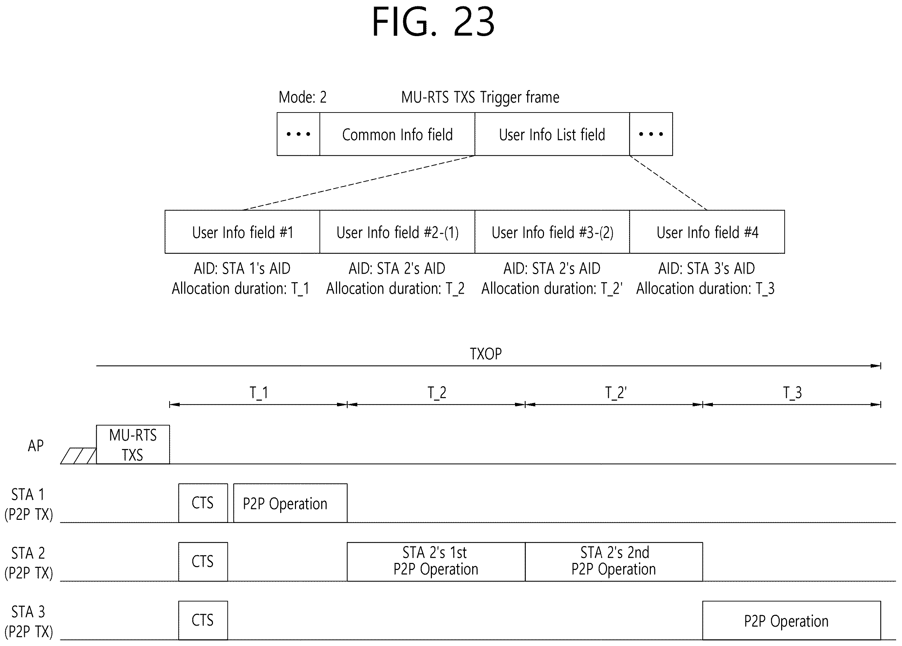

FIG. 23 shows a second example of an operation based on multiple triggered TXOP sharing according to an embodiment of the present disclosure. In FIG. 23, i) the order of allocation durations allocated to three STAs within a TXOP duration follows the order of corresponding User Info fields within the User Info List field, and ii) two or more User Info fields for the same STA (e.g., STA 2) are arranged consecutively, as in FIG. 21.

Referring to FIG. 23, following STA 1, which performed P2P transmission during T_1 immediately after receiving the MU-RTS TXS TF, STA 2 may perform the first P2P transmission during the time T_2, which is the allocation duration of the User Info field #2-(1) in which the multiple allocation indication bit is set to 1. Alternatively, when multiple TXOPs (or multiple allocation durations within a TXOP duration) are allocated consecutively, the STA may decode a User Info field corresponding to the STA's AID (e.g., User Info field #1) and at least one subsequent User Info field consecutive to the User Info field corresponding to the STA's AID, according to a decoding rule set to decode the User Info field (e.g., User Info field #1) and the subsequent User Info field (e.g., User Info field #2-(1)) without using a separate multiple allocation indication bit. In this case, for example, STA 2 may not identify the times T_2 and T_2' allocated from the AP as a single long allocation duration (i.e., T_2 + T_2'), but may perform P2P transmission by regarding as individual TXOP durations (or allocation durations within the TXOP duration). That is, STA 2 must complete the PPDU transmission and reception of all responses within each individual time duration of T_2 and T_2'. Alternatively, STA 2 may consider the time durations of T_2 and T_2' allocated by the AP as a single long allocation duration (i.e., T_2 + T_2'), and perform P2P transmission during the entire allocation duration of T_2 + T_2'. That is, STA 2 can complete the PPDU transmission and reception of all responses within the entire allocation duration of T_2 + T_2'.

STA 2, which performed the first P2P transmission during T_2, may subsequently perform the second P2P transmission during T_2'. This allows STA 2, which requires a large number of frame exchanges during a time duration exceeding the maximum allocation duration allocated to a single STA, to complete the P2P transmission within a single TXOP duration of the AP.

The multiple triggered TXOP sharing methods for multiple users illustrated in FIGs. 22 and 23 may have a static characteristic, since the AP allocates a single or multiple TXOP durations (or single or multiple allocation durations within a TXOP duration) to a STA based on information previously requested from the STA. In addition, such as when two or more allocation durations are consecutively allocated to a specific STA within a TXOP duration, P2P transmission may become unnecessary after the STA is allocated a relatively long period of consecutive TXOP durations (or allocation durations within a TXOP duration) from the AP. In this case, to prevent the channel from being wasted for a long period of time, the STA may return the allocated TXOP duration (or allocation duration within the TXOP duration).

### 2. When performing P2P regardless of the order of the User Info fields

Unlike methods where the AP predetermines the P2P operation order of all STAs to share a TXOP duration with multiple STAs (e.g., performing P2P considering the order of the User Info fields), the AP can support P2P operation regardless of the order of the User Info fields configured by the AP within the User Info List field. This requires a procedure for the AP to trigger each STA at the start of the allocation duration allocated to each STA, and indications for the STA to perform the P2P operation first immediately after receiving the MU-RTS TXS TF.

### 2-1) Order indication method

In a single-user triggered TXOP sharing protocol/procedure, a STA can start its allocation duration when the PHY-RXEND.indication primitive of a PPDU comprising a MU-RTS TXS TF transmitted from the AP occurs. In other words, the start point of the allocation duration in a single-user triggered TXOP sharing protocol/procedure may be the time when the PHY-RXEND.indication primitive of a PPDU comprising a MU-RTS TXS TF transmitted from the AP occurs. However, in a multi-user triggered TXOP sharing use case, if the AP does not determine the start point of a STA's allocation duration in advance, all STAs indicated by the User Info List field may start their allocation durations when the PHY-RXEND.indication primitive occurs, in which case collisions may occur among STAs.

To indicate which STA will perform the P2P operation first, the reserved subfield in the User Info field of FIG. 17 may be used. For example, one bit in the reserved subfield may be used as a order indication (or order information) that includes an indication for a STA that must start its allocation duration immediately after receiving the MU-RTS TXS TF, as in the existing single-user case, and/or an indication for a STA that does not need to start its allocation duration immediately after receiving the MU-RTS TXS TF. In this case, a STA whose order indication field in the corresponding User Info field is set to 1 may start its allocation duration immediately after receiving the MU-RTS TXS TF, and perform P2P operation/transmission during the allocation duration. On the other hand, the remaining STAs whose order indication field in the corresponding User Info field is set to 0 may not start their allocation duration immediately after receiving the MU-RTS TXS TF, but may wait until a trigger frame is transmitted from the AP.

### 2-2) AP triggering method

In order for another STA to initiate P2P transmission following the STA that performs P2P transmission first immediately after receiving the MU-RTS TXS TF using the order indication method, an additional trigger frame (e.g., a basic trigger frame) must be transmitted from the AP. The trigger frame may include a control frame, a QoS data frame, and/or a QoS null frame. For example, the MU-RTS TXS TF may be reused as a control frame, which may be similar to the method of allocating a time duration (e.g., a TXOP duration/allocation duration) to a single STA in the single-user triggered TXOP sharing protocol/procedure. Alternatively, to initiate P2P transmission, the AP may transmit an RTS frame (to the STA). Since the STA receiving the RTS frame has already been allocated an allocation duration via the MU-RTS TXS TF, transmission can begin immediately upon receiving the RTS frame. Additionally, since the frame for triggering the start of P2P transmission of a subsequent STA can be transmitted individually to the target STA, a QoS data frame and/or a QoS null frame can be used as the frame for triggering the start of P2P transmission of the subsequent STA.

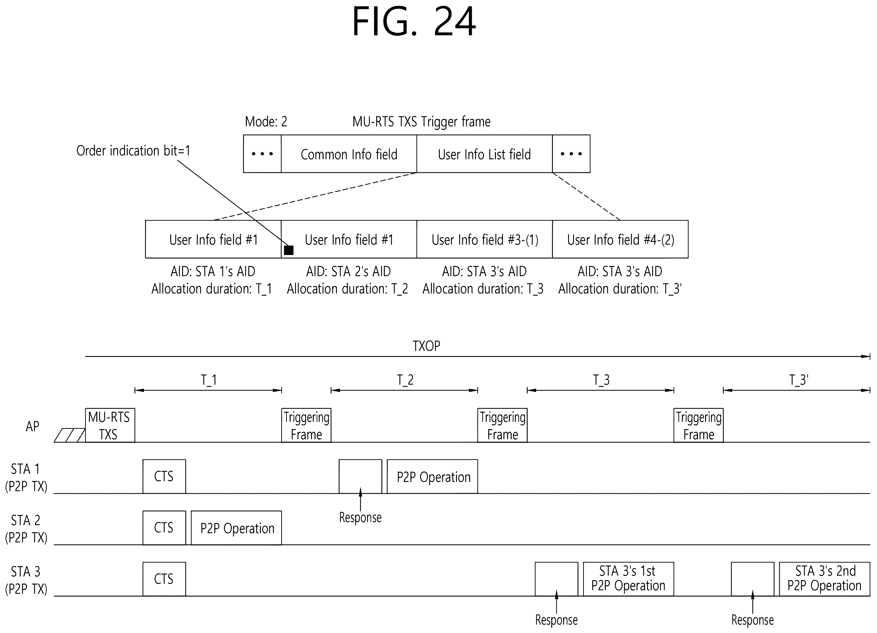

FIG. 24 shows a third example of an operation based on multiple triggered TXOP sharing according to an embodiment of the present disclosure. In FIG. 24, i) the order of allocation durations allocated to different STAs within a TXOP duration is independent of the order of the corresponding User Info fields within the User Info List field, and ii) there are two User Info fields/allocation durations for STA 3.

Referring to FIG. 24, since the order indication bit of the second User Info field within the MU-RTS TXS TF is set to 1, STA 2 can perform the P2P operation first. The order indication bits within the remaining User Info fields may be set to 0. Immediately after receiving the MU-RTS TXS TF, STA 2 associated with the User Info field including the order indication bit set to 1 may perform P2P transmission during the time period of its own allocation duration. After the P2P transmission of STA 2 is completed, the AP may transmit a trigger frame to a STA (e.g., STA 1) that will subsequently perform a P2P operation. The subsequent STA 1 that has received the trigger frame may perform frame exchange (i.e., P2P operation/transmission) during the time period of its own allocation duration T_1 immediately after receiving the trigger frame or immediately after transmitting a response frame to the trigger frame. The same process may be repeated for the subsequent STA, and STA 3 that has been allocated multiple TXOP durations (or multiple allocation durations within the TXOP duration) may first perform P2P transmission during the time period indicated by the allocation duration included in the User Info field (e.g., User Info field #3-(1)) having the multiple allocation indication bit set to 1 immediately after receiving the trigger frame. As another example, STA 3, which is allocated multiple TXOP durations (or multiple allocation durations within a TXOP duration), may first perform P2P transmission during the time duration indicated by the allocation duration included in the User Info field (e.g., User Info field #3-(1)) that is arranged first in the User Info List field among the User Info fields for STA 3 immediately after receiving a trigger frame. That is, the order of allocation durations allocated to the same STA within the TXOP duration may follow the order of the corresponding User Info fields within the User Info List field. After STA 3 completes its first P2P operation, if it receives a trigger frame indicating the start of a second allocation duration from the AP, STA 3 may perform additional P2P operation/transmission/frame exchange.

Meanwhile, with regard to multi-user triggered TXOP sharing, an appropriate TXOP allocation method needs to be applied to the AP for efficient operation of multiple STAs.

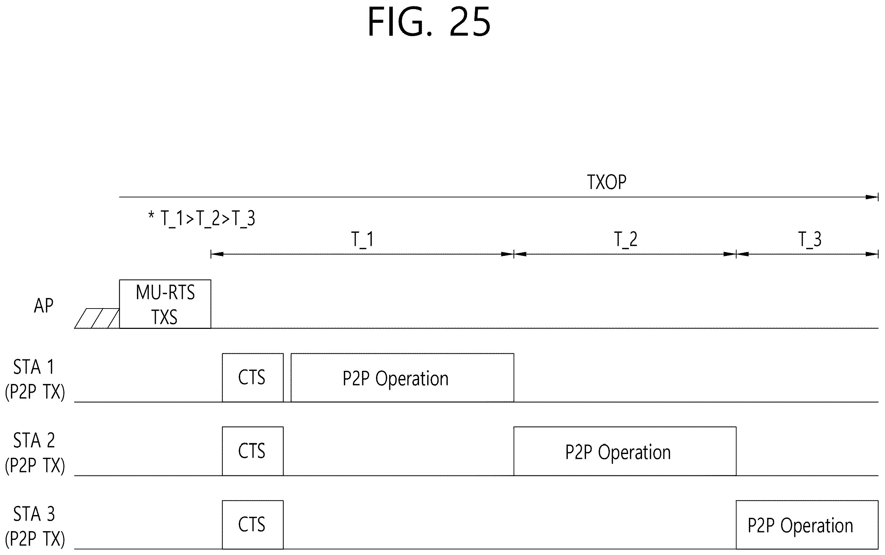

FIG. 25 shows an example of a TXOP allocation method according to an embodiment of the present disclosure.

In a multi-user triggered TXOP sharing protocol/procedure, if each STA requests a TXOP duration of different lengths, TXOP allocation can be performed, for example, as illustrated in FIG. 25. If the EHT AP randomly allocates a TXOP duration to each STA, the allocation durations can be allocated in the order of T_1, T_2, and T_3, as illustrated in FIG. 25. Information for the allocation durations can be transmitted to all STAs via the MU-RTS TXS TF (TXOP sharing mode 2). Since STA 1's allocated TXOP duration (or the allocation duration within the TXOP duration) is located first, it can perform P2P transmission for a period of time T_1 immediately after receiving the TF. On the other hand, STA 2, which is allocated T_2, and STA 3, which is allocated T_3, must remain in active mode for times T_1 and (T_1 + T_2), respectively, and wait until their allocation duration begin. At this time, if the P2P operation duration of the initially allocated STA is long, as shown in FIG. 25, subsequent STAs that require only relatively short P2P transmissions must wait unnecessarily for a long time. This issue is not significant when all STAs request the same TXOP duration. However, as the difference in the allocation durations between STAs increases, the final STA that requires only short-term P2P operations must wait a long time until its turn.

Therefore, in a multi-user triggered TXOP sharing protocol/procedure that supports P2P transmissions of multiple STAs, efficient TXOP duration allocation is required for requests for TXOP duration with different lengths.

The present disclosure proposes a method for configuring User Info fields and a short TXOP duration first allocation method for enabling early P2P operations by specific STAs participating in a multi-user triggered TXOP sharing protocol/procedure.

The present disclosure proposes a method for configuring User Info fields and a short TXOP duration first allocation method to enable some STAs participating in a multi-user triggered TXOP sharing procedure to perform P2P operations earlier than other STAs.

If the MU-RTS TXS TF is extended to a multi-user scenario, TXOP durations can be provided to multiple STAs by individually allocating corresponding User Info fields within the MU-RTS TXS TF based on the MU-RTS/CTS protocol defined in 802.11ax. STAs receiving this MU-RTS TXS TF can simultaneously transmit a CTS in response. At this time, multiple STAs, each receiving different TXOP durations, must be able to accurately determine the time duration allocated to them by the AP to successfully perform non-TB PPDU transmission or P2P transmission and prevent waste of channel. Therefore, each User Info field can indicate the timing of the TXOP duration as follows:

### Configuring User Info fields for prioritized allocation of short TXOP durations

To allocate TXOP durations to multiple STAs, the User Info List field within the MU-RTS TXS TF can include multiple User Info fields. STAs communicate requirements for P2P to the AP through the stream classification service (SCS) request/response process, and the AP can prioritize User Info fields for STAs that request short TXOP durations when configuring User Info fields. Therefore, the User Info field for the STA requiring the longest TXOP duration can be located last. Multiple STAs receiving a MU-RTS TXS TF comprising such a User Info List field can sequentially calculate the time duration by decoding the User Info field allocated from the first to the last User Info field. That is, a STA can determine the start time of its allocation duration by adding the allocation durations within all User Info fields allocated before the User Info field allocated to it.

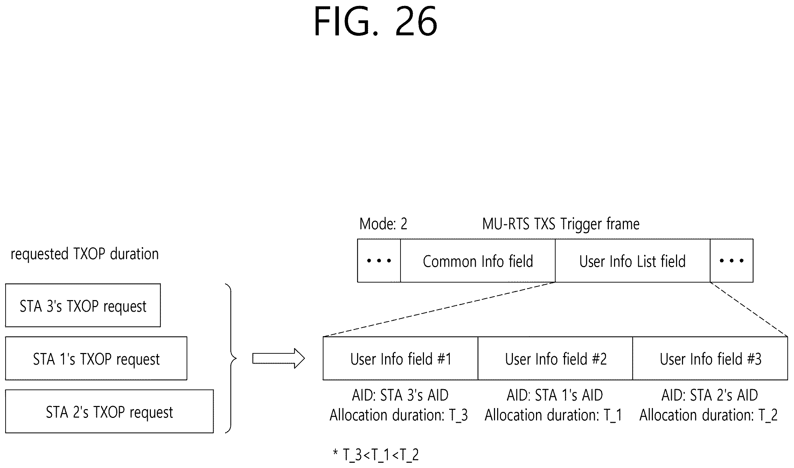

FIG. 26 shows an example of the configuration of a User Info field for prioritized allocation of short TXOP durations according to an embodiment of the present disclosure.

Referring to FIG. 26, an EHT AP can allocate allocation durations within a MU-RTS TXS TF set to TXOP sharing mode 2 based on the TXOP durations requested by each STA. At this time, the User Info List field can be sequentially configured, starting from STA 3, which will be allocated the shortest allocation duration, to STA 2, which will be allocated the longest allocation duration. Since STA 3 has its own User Info field positioned at the very front, it can perform P2P transmission for a period of time T_3 immediately after receiving the MU-RTS TXS TF (same as the single user case). STA 1, which has been allocated T_1, can perform P2P transmission for a period of time T_1 from after T_3, which is the allocation duration of STA 3. STA 2 can also identify the period of time T_2 from after (T_3 + T_1) as its allocation duration based on the allocation information of STA 3 and STA 1.

The above User Info field configuration can be designed simply from the MU perspective. Furthermore, according to the above User Info field configuration, each STA needs to decode the allocation duration subfield, even if it is not its own User Info field, until it reaches the User Info field comprising its own AID. That is, the STA whose User Info field is located last needs to decode the allocation duration subfields within all previous User Info fields and utilize the decoding results (to determine the start point of its own allocation duration).

### Operation of prioritized allocation of short TXOP duration

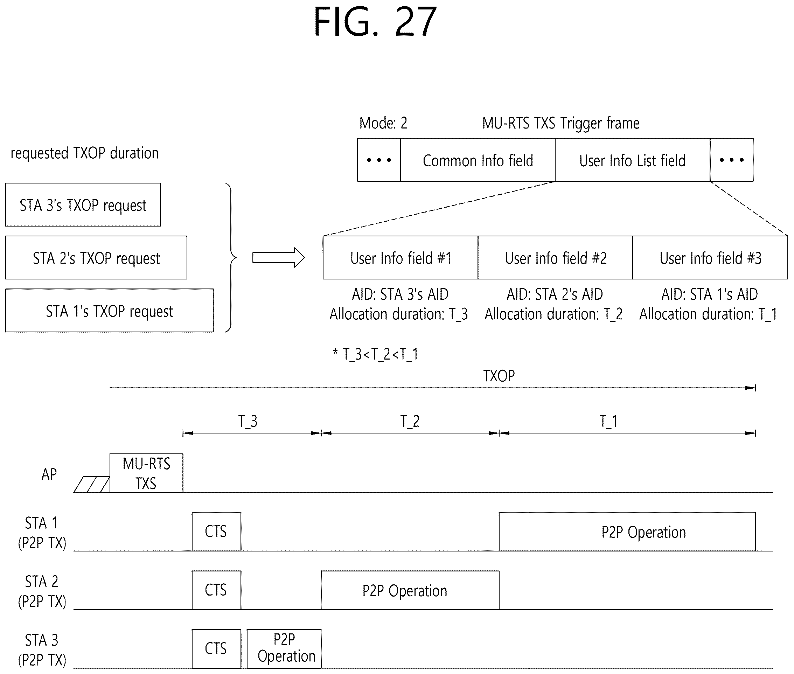

FIG. 27 shows an example of an operation of prioritized allocation of short TXOP duration according to an embodiment of the present disclosure.

Referring to FIG. 27, the EHT AP can allocate allocation durations T_1, T_2, and T_3 based on TXOP durations of different lengths requested from each STA. In this case, the User Info fields can be configured in descending order of the TXOP durations requested from each STA, as illustrated in FIG. 26. Since the User Info field corresponding to STA 3 is located first, STA 3 can perform P2P transmission during the time duration T_3 immediately after receiving the MU-RTS TXS TF from the EHT AP. STA 2 reads information in User Info fields #1 and #2 after receiving the MU-RTS TXS TF, waits until the previous allocation duration T_3 of STA 3 has elapsed, and then performs P2P transmission during the allocation duration T_2 from after T_3. STA 1 can also wait for (T_3 + T_2) based on information in User Info fields #1 and #2, and then identify T_1 of its User Info field #3 as the allocation duration. In other words, by prioritizing allocating TXOP duration to STAs requiring only short-term P2P transmissions, these STAs can avoid unnecessary waiting.

To prioritize allocating short TXOP duration, each STA must decode the allocation duration in the User Info field, even if it does not comprise its own AID, before identifying the User Info field comprising its own AID when decoding the User Info List field, and utilize the decoding result to determine the start point of its allocation duration.

The User Info field configuration method and the acquisition of allocation duration information based on the order of User Info fields according to the present disclosure have the advantage of being simple to design from a multi-user perspective.

Meanwhile, with respect to multi-user triggered TXOP sharing, a power-efficient TXOP duration allocation method needs to be applied to some STAs that are sensitive to power consumption.

In the present disclosure, power sensitivity is introduced. Power sensitivity may comprise the STA's listen interval and/or the BSS's maximum idle period. For example, a shorter STA's listen interval may indicate a higher STA's power sensitivity. Alternatively, a longer STA's maximum idle period may indicate a higher STA's power sensitivity.

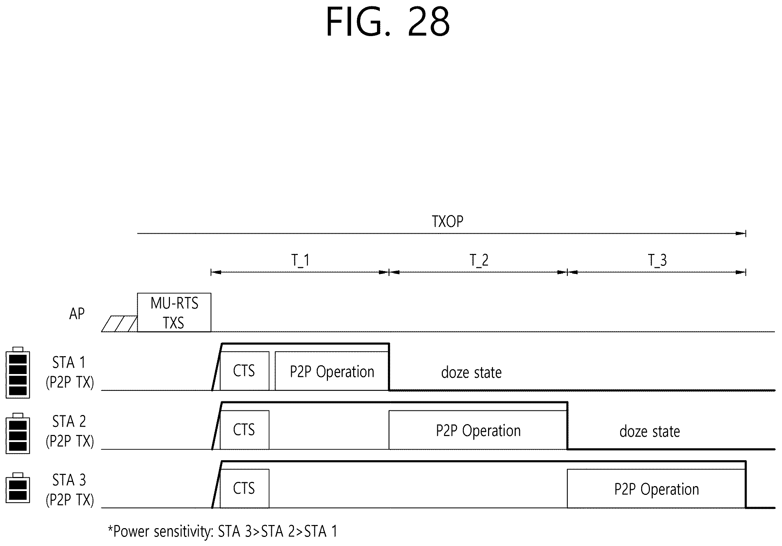

FIG. 28 shows an example of allocating TXOP durations to STAs with different power sensitivities in a multi-user triggered TXOP sharing procedure according to an embodiment of the present disclosure.

Referring to FIG. 28, STAs with different power sensitivities can be allocated TXOP durations in any order through the multi-user triggered TXOP sharing procedure. When an EHT AP randomly allocates TXOP durations to each STA, the allocation durations may be allocated in the order of T_1, T_2, and T_3, as shown in FIG. 28. Information for the allocation duration can be transmitted to all STAs through MU-RTS TXS TF (TXOP sharing mode 2). Since STA 1 has its allocated TXOP duration positioned first, it can perform P2P transmission for a time duration of T_1 immediately after receiving the MU-RTS TXS TF. On the other hand, STA 2, which has been allocated T_2, and STA 3, which has been allocated T_3, must maintain an active mode for time durations of T_1 and (T_1 + T_2), respectively, or operate with a specific power management scheme and wait until its allocation duration starts. These subsequent STAs (i.e., STA 2 and STA 3) can apply an appropriate power management scheme to stay in a doze state until performing a P2P operation, thereby reducing unnecessary power consumption. However, some STAs allocated TXOP durations may experience a CTS failure and/or early terminate the allocated TXOP duration (or an allocation duration within the TXOP duration). In this case, trigger frames cannot be delivered to subsequent STAs that remain in a doze state, resulting in waste of channel.

Therefore, in a multi-user triggered TXOP sharing protocol/procedure that supports P2P transmissions for multiple STAs, efficient TXOP duration allocation based on the power sensitivity of the STAs is required.

The present disclosure proposes a method for configuring a User Info field that allows some STAs participating in a multi-user triggered TXOP sharing procedure to perform P2P operations earlier than other STAs, and a method for prioritizing TXOP duration allocation, as follows:

When the MU-RTS TXS TF is applied to a multi-user case, the AP can provide a TXOP duration to multiple STAs by allocating User Info fields corresponding to each STA within the MU-RTS TXS TF based on the MU-RTS / CTS protocol defined in 802.11ax. STAs that receive the MU-RTS TXS TF can respond by simultaneously transmitting a CTS. At this time, each STA must know exactly when its requested TXOP duration was allocated by the AP to successfully perform non-TB PPDU transmission or P2P transmission, and also to prevent waste of channel. Therefore, each User Info field can indicate the TXOP duration (or the allocation duration within the TXOP duration) (or its start time) to each STA in the following way:

### Configuration of User Info field considering power sensitivity

To allocate TXOP durations to multiple STAs, the User Info List field within the MU-RTS TXS TF can include multiple User Info fields. STAs communicate requirements for P2P operation and/or power sensitivity to the AP through the SCS request/response process. When configuring User Info fields, the AP can preferentially place User Info fields for STAs with high power sensitivity within the User Info List field. Accordingly, User Info fields for STAs with low power sensitivity can be placed last within the User Info List field. STAs that receive an MU-RTS TXS TF including such User Info fields sequentially decode the User Info fields from a first allocated User Info field to a last User Info field, and sequentially calculate allocation durations. In other words, each STA determines a start time of its own allocation duration by summing the allocation durations indicated by all of the User info fields arranged prior to the User Info field allocated to the STA.

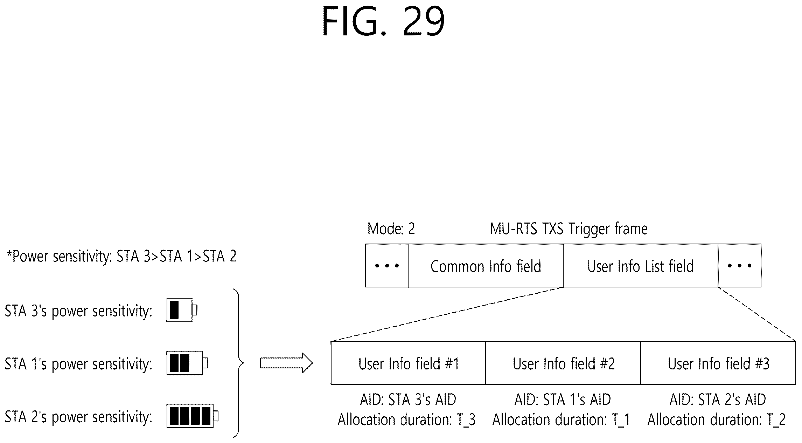

FIG. 29 shows an example of a User Info field format considering power sensitivity according to an embodiment of the present disclosure.

Referring to FIG. 29, an EHT AP can allocate allocation durations within a MU-RTS TXS TF set to TXOP sharing mode 2 based on the TXOP durations requested by each STA. At this time, the AP can configure the User Info List field sequentially from STA 3, which is most sensitive to power consumption, to STA 2, which is insensitive to power consumption. Since the User Info field corresponding to STA 3 is located at the front, STA 3 can perform P2P transmission for a time period of T_3 immediately after receiving the MU-RTS TXS TF, similar to the single user case. STA 1, which has been allocated T_1, can perform P2P transmission for a time period of T_1 from after T_3, which is the allocation duration of STA 3. STA 2 can also identify a time period of T_2 from after (T_3 + T_1) as its own allocation duration based on the allocation duration information of STA 3 and STA 1.

This User Info field format can be designed simply from the MU perspective. Each STA needs to decode the allocation duration subfield, even if it is not its own User Info field, until it reaches the User Info field comprising its AID. That is, the STA with the last User Info field needs to decode the allocation duration subfields within all previous User Info fields and utilize the decoding results (to determine the start time of its own allocation duration).

### Operation of prioritized allocation of TXOP duration considering power sensitivity

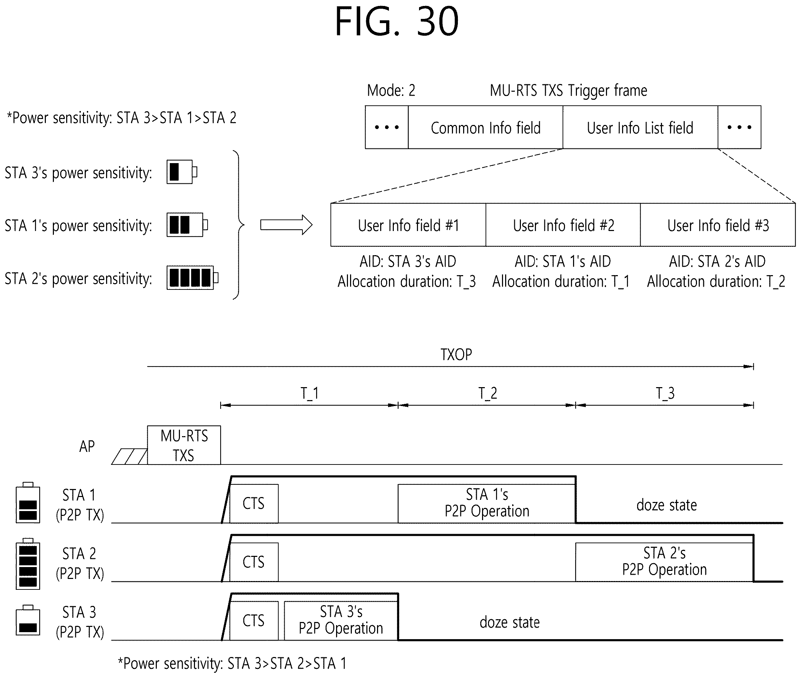

FIG. 30 shows an example of an operation of prioritized allocation of TXOP duration considering power sensitivity according to an embodiment of the present disclosure.

Referring to FIG. 30, the EHT AP can allocate allocation durations of T_1, T_2, and T_3 based on the requirements of STAs with different power sensitivities. At this time, as shown in FIG. 29, the AP can configure the User Info fields in the order of high power sensitivity of each STA. Since the User Info field corresponding to STA 3 is placed at the front of the User Info List field, STA 3 can perform P2P transmission during a time period of T_3 immediately after receiving the MU-RTS TXS TF from the EHT AP. After receiving the MU-RTS TXS TF, STA 1 reads the information of User Info field #1 and User Info field #2, and waits until an allocation duration T_3 of preceding STA 3 elapses. Thereafter, STA 1 is able to perform P2P transmission during an allocation duration of T_1 from after the T_3. Similarly, STA 2, based on the information of User Info field #1 and User Info field #2, waits for (T_3 + T_1), and then identifies T_2 corresponding to User Info field #3 allocated thereto as its allocation duration. That is, by allocating a TXOP duration first to an STA that needs to reduce power consumption, the power consumption of the corresponding STA can be minimized.

When decoding a User Info List field, each STA needs to decode allocation durations of User Info fields even if the fields do not include its own AID, until the STA identifies a User Info field including its own AID, and utilize the decoding result in order to determine a start time of its own allocation duration.

The User Info field configuration method of the present disclosure and the acquisition of allocation duration information based on the order of the User Info fields have the advantage of being simple to design from a multi-user perspective.

The technical features of the present disclosure described above can be applied to various devices and methods. For example, the technical features of the present disclosure described above can be performed/supported by the devices of FIG. 1 and/or FIG. 13. For example, the technical features of the present disclosure described above can be applied only to a part of FIG. 1 and/or FIG. 13. For example, the technical features of the present disclosure described above can be implemented based on the processing chips 114, 124 of FIG. 1, or implemented based on the processors 111, 121 and the memories 112, 122 of FIG. 1, or implemented based on the processor 610 and the memory 620 of FIG. 13.

For example, the processor 111, the processing chip 114 of FIG. 1 and/or the processor 610 of FIG. 13 may be configured to execute instructions stored in the memory 112, 620 to implement the method performed by the STA in the present disclosure. The method comprises: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

For example, the processor 121 and/or processing chip 124 of FIG. 1 may be configured to execute instructions stored in the memory 122 to implement the method performed by the AP in the present disclosure. The method comprises: obtaining a transmission opportunity (TXOP); configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and transmitting the TXS trigger frame, wherein the plurality of user information fields comprise at least one user information field for a STA indicating at least one allocation duration of the STA, and wherein a start time of a first allocation duration among the at least one allocation duration is determined based on at least one of order information or a basic trigger frame.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 112 of FIG. 1, the memory 620 of FIG. 13, and/or a separate external memory/storage medium/disk. The CRM may store instructions that implement the method performed by the STA in the present disclosure based on being executed by a processor (e.g., the processor 111, the processing chip 114 of FIG. 1, and/or the processor 610 of FIG. 13). The method comprises: receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame; identifying at least one allocation duration of the STA based on at least one user information field for the STA among the plurality of user information fields; determining a start time of a first allocation duration among the at least one allocation duration based on at least one of order information or a basic trigger frame; and transmitting data in the first allocation duration after the start time.

For example, the CRM may be the memory 122 of FIG. 1 and/or a separate external memory/storage medium/disk. The CRM may store instructions that implement the method performed by the AP in the present disclosure based on being executed by a processor (e.g., the processor 121 and/or the processing chip 124 of FIG. 1). The method comprises: obtaining a transmission opportunity (TXOP); configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and transmitting the TXS trigger frame, wherein the plurality of user information fields comprise at least one user information field for a STA indicating at least one allocation duration of the STA, and wherein a start time of a first allocation duration among the at least one allocation duration is determined based on at least one of order information or a basic trigger frame.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, method for configuring a User Info field, and method for multiple allocation indication and order indication in the present disclosure can be simply designed from a multi-user perspective. In addition, in a single-user triggered TXOP sharing protocol/procedure, if each STA requires a large number of P2P transmissions for a period exceeding the maximum allocation duration that can be allocated from the AP, the AP must obtain a new TXOP duration through medium contention, but the multiple triggered TXOP sharing method of the present disclosure can enable the STA to perform and complete P2P transmissions for a relatively long period of time within a single TXOP duration.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method performed by a station (STA) in a wireless local area network (LAN) system, comprising:
receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame;
identifying at least one allocation duration of the STA based on at least one user information field for the STA among the plurality of user information fields;
determining a start time of a first allocation duration among the at least one allocation duration based on at least one of order information or a basic trigger frame; and
transmitting data in the first allocation duration after the start time.

2. The method of claim 1, wherein the transmitting of the data comprises transmitting the data in the first allocation duration immediately after receiving the TXS trigger frame, based on a user information field indicating the first allocation duration including the order information set to a first value.

3. The method of claim 1, wherein the transmitting the data comprises transmitting the data in the first allocation duration immediately after receiving the basic trigger frame for the STA, based on a user information field indicating the first allocation duration including the order information set to a second value, and
wherein the basic trigger frame is received after the TXS trigger frame is received.

4. The method of claim 1, wherein the at least one user information field for the STA comprises a first user information field indicating the first allocation duration and a second user information field indicating a second allocation duration, and
wherein the first user information field is positioned before the second user information field in a user information list field of the TXS trigger frame.

5. The method of claim 4, wherein the first user information field comprises multiple allocation information indicating that at least one user information field is positioned after the first user information field in the user information list field, and
wherein the multiple allocation information is set to a first value.

6. The method of claim 4, wherein the first user information field and the second user information field are positioned non-consecutively in the user information list field.

7. The method of claim 4, wherein the first user information field and the second user information field are positioned consecutively in the user information list field.

8. The method of claim 7, further comprising after decoding the first user information field, decoding at least one user information field consecutively following the first user information field in the user information list field until no user information field for the STA is decoded.

9. The method of claim 4, further comprising after transmitting the data in the first allocation duration, transmitting data in the second allocation duration,
wherein the transmitting of data in the second allocation duration comprises transmitting data in the second allocation duration immediately after receiving the basic trigger frame for the STA.

10. The method of claim 1, wherein the data is transmitted to at least one of an access point (AP) or another STA.

11. A station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame;
identifying at least one allocation duration of the STA based on at least one user information field for the STA among the plurality of user information fields;
determining a start time of a first allocation duration among the at least one allocation duration based on at least one of order information or a basic trigger frame; and
transmitting data in the first allocation duration after the start time.

12. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame;
identifying at least one allocation duration of the STA based on at least one user information field for the STA among the plurality of user information fields;
determining a start time of a first allocation duration among the at least one allocation duration based on at least one of order information or a basic trigger frame; and
transmitting data in the first allocation duration after the start time.

13. A non-transitory computer readable medium (CRM) having stored thereon a program code implementing instructions that, based on being executed by at least one processor, perform operations comprising:
receiving a transmission opportunity (TXOP) sharing (TXS) trigger frame comprising a plurality of user information fields, wherein each of the plurality of user information fields indicates a corresponding allocation duration among a plurality of allocation durations within a TXOP duration related to the TXS trigger frame;
identifying at least one allocation duration of the STA based on at least one user information field for the STA among the plurality of user information fields;
determining a start time of a first allocation duration among the at least one allocation duration based on at least one of order information or a basic trigger frame; and
transmitting data in the first allocation duration after the start time.

14. An access point (AP) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
obtaining a transmission opportunity (TXOP);
configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and
transmitting the TXS trigger frame,
wherein the plurality of user information fields comprise at least one user information field for a STA indicating at least one allocation duration of the STA, and
wherein a start time of a first allocation duration among the at least one allocation duration is determined based on at least one of order information or a basic trigger frame.

15. The AP of claim 14, wherein the start time of the first allocation duration is determined as being immediately after transmitting the TXS trigger frame, based on a user information field indicating the first allocation duration including the order information set to a first value.

16. The AP of claim 14, wherein the start time of the first allocation duration is determined as being immediately after transmitting the basic trigger frame for the STA, based on a user information field indicating the first allocation duration including the order information set to a second value, and
wherein the basic trigger frame is transmitted after the TXS trigger frame is transmitted.

17. The AP of claim 14, wherein the at least one user information field for the STA comprises a first user information field indicating the first allocation duration and a second user information field indicating a second allocation duration, and
wherein the first user information field is positioned before the second user information field in a user information list field of the TXS trigger frame.

18. The AP of claim 17, wherein the first user information field comprises multiple allocation information indicating that at least one user information field is positioned after the first user information field in the user information list field, and
wherein the multiple allocation information is set to a first value.

19. The AP of claim 17, wherein the first user information field and the second user information field are positioned consecutively or non-consecutively in the user information list field.

20. A method performed by an access point (AP) in a wireless local area network (LAN) system, comprising:
obtaining a transmission opportunity (TXOP);
configuring a user information list field of a TXOP sharing (TXS) trigger frame related to the TXOP, wherein the user information list field comprises a plurality of user information list fields, and each of the plurality of user information fields indicates a corresponding allocation duration among a plurality of allocation durations within the TXOP; and
transmitting the TXS trigger frame,
wherein the plurality of user information fields comprise at least one user information field for a STA indicating at least one allocation duration of the STA, and
wherein a start time of a first allocation duration among the at least one allocation duration is determined based on at least one of order information or a basic trigger frame.
